# EUROPEAN PATENT SPECIFICATION

(11) **EP 0 792 189 B1**
(45) Date of publication and mention of the grant of the patent: **05.08.1998**
(21) Application number: 95933214.9
(22) Date of filing: 22.09.1995
(51) Int. Cl.: B01J 8/06, B01J 8/00, C01B 3/38

(54) **CATALYTIC REACTOR DESIGNED TO REDUCE CATALYST SLUMPING AND CRUSHING**
KATALYTISCHER REAKTOR ZUR VERMINDERUNG VON RUTSCHUNG BRECHEN DES KATALYSATORS
REACTEUR CATALYTIQUE CON U POUR REDUIRE L'EFFONDREMENT ET L'ECRASEMENT DU CATALYSEUR

(30) Priority: 17.11.1994 US 340937
(43) Date of publication of application: 03.09.1997
(73) Proprietor: INTERNATIONAL FUEL CELLS CORPORATION, South Windsor Connecticut 06074 (US)
(72) Inventor: SEDERQUIST, Richard, A., Newington, CT 06111 (US); CORRIGAN, Thomas, J., Vernon, CT 06074 (US); SZYDLOWSKI, Donald, F., Ellington, CT 06029 (US); BONK, Stanley, O., Tolland, CT 06084 (US)
(74) Representative: Ferreccio, Rinaldo
(86) International application number: US9512233
(87) International publication number: WO9615850

(56) References cited:
- FR-A- 2 531 944
- PATENT ABSTRACTS OF JAPAN vol. 16, no. 25 (C-0903) 22 January 1992 & JP,A,03 238 036 (TOSHIBA CORP.) 23 October 1991
- PATENT ABSTRACTS OF JAPAN vol. 18, no. 248 (C-1198) 12 May 1994 & JP,A,06 031 156 (UBE IND. LTD.) 8 February 1994
- PATENT ABSTRACTS OF JAPAN vol. 13, no. 328 (C-621) 24 July 1989 & JP,A,01 107 844 (TOSHIBA CORP.) 25 April 1989

## Description

### Technical Field

The present invention relates to an improved catalytic reactor and particularly to a catalytic reactor which resists catalyst slumping and crushing.

### Background of the Invention

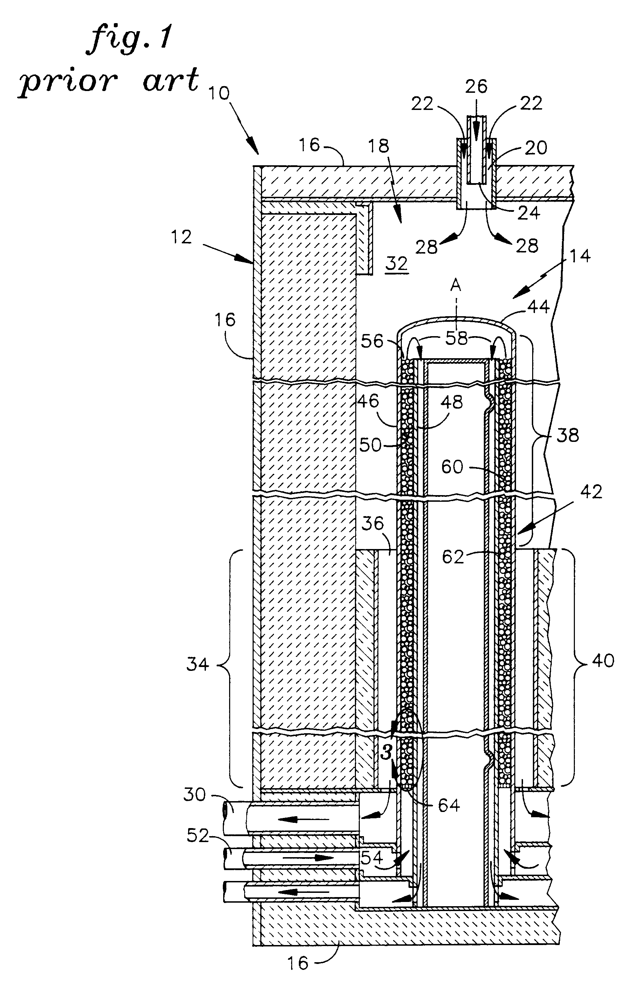

The steam reformation of a reactor fuel, such as a hydrocarbon fuel, into a useful product gas, is well known in the art. This steam reformation is accomplished by causing the reactor fuel and steam to contact a heated catalyst bed. Fig. **1**, shows a cross-sectional view of a prior art catalytic reaction apparatus **10** for just such purpose. The apparatus **10** comprises a furnace **12** which is the heat source for the reformation process and at least one vertical catalytic reactor **14**.

The furnace **12** has furnace walls **16** arranged to define a furnace volume **18**, an inlet **20** for introducing air **22** into the furnace volume **18**, an injection means **24** for introducing a furnace fuel **26** into the furnace volume **18** thereby producing the hot combustion gases **28**, and an exhaust **30** for removing the combustion gases **28**. The furnace volume **18** is divided into a burner cavity **32** where the combustion gases **28** originate and a heat transfer section **34** positioned below the burner cavity **32**. The heat transfer section **34** has an annular combustion gas passageway **36** for flow of the combustion gases **28**. The combustion gas passageway **36** extends along the outside of the catalytic reactor **14** from the burner cavity **32** through the heat transfer section **34** to the exhaust **30**. The combustion gas passageway **36** may or may not be filled with solid particles or other materials **(not shown)**, which assist in transferring heat from the combustion gases **28** to the catalytic reactor **14**.

The catalytic reactor **14** disposed within the combustion gas passageway **36** of the furnace **12** has a hot section **38** disposed within the burner cavity **32** and a cooler section **40** disposed within the heat transfer section **34**. Each catalytic reactor **14** has an axis of symmetry **A** and comprises a reactor tube **42** and a cap **44**, which seals the tube **42** at the top. The reactor tube **42** consists of an outer reactor wall **46** exposed to the combustion gases **28**, and an inner reactor wall **48** which is spaced away from the outer reactor wall **46** defining an annular reaction chamber **50** between the reactor walls **46, 48**. The reaction chamber **50** has an inlet **52** disposed within the reaction chamber **50** for entry of a reactor fuel and steam **54**, an outlet **56** disposed within the reaction chamber **50** spaced away from the inlet **52** for exit of the product gas **58** from the reaction chamber **50**, a catalyst **60** disposed within the reaction chamber **50** forming a catalyst bed **62** for aiding in the reformation, and an annular support plate **64** disposed within the reaction chamber **50** for supporting the catalyst bed **62**. There are a multiplicity of holes **(not shown)** disposed through the support plate **64**.

The catalytic reaction apparatus **10** can utilize any conventional catalytic reactor **14** capable of withstanding the desired operating temperatures and thermal cycles within the furnace **12**. Typically temperatures and thermal cycles are up to about 887°C (1,600°F). Generally, the catalytic reactor **14** is a stainless steel tube or similar hollow structure. Some such conventional catalytic reactors are disclosed in U.S. Patent No. 4,071,330, U.S. Patent No. 4,098,587, U.S. Patent No. 4,098,588, U.S. Patent No. 4,098,589, and U.S. Patent No. 4,203,950.

The catalyst **60** used is a steam reforming catalyst well known by one of ordinary skill in the art. The catalyst is typically in the shape of spheres, pellets or Raschig rings. Within the reaction chamber **50**, the weight of the catalyst **60** within the catalyst bed **62** is distributed downward throughout the catalyst bed **62** and born by the support plate **64**.

In operation, the combustion gases **28** flow from the burner cavity **32** along the outside of the reactor **14** through the combustion gas passageway **36** and out the exhaust **30**. A mixture of the reactor fuel and steam **54** enter through the reactor inlet **52** and flow through the reaction chamber **50**. Thus, the combustion gases **28** and the reactor fuel and steam **54** are flowing counter-current in a heat exchange relationship. The heat exchange relationship and radiant heat from the furnace walls **16** drive the steam reforming reaction within the reaction chamber **50** between the reactor fuel and steam **54** and the catalyst **60**, thus producing the product gas **58**. The product gas **58** exits the reaction chamber **50** through the outlet **56**. In industry, the product gas **58** is typically hydrogen-rich.

The catalytic reactor **14** experiences a problem due to thermal cycling. During start-up the catalytic reactor **14** temperature increases and the reactor walls **46, 48** and catalyst **60** expand at different rates. The volume between the reactor walls **46, 48** or the volume of the reaction chamber **50** expands more than the volume of the catalyst **60** because the reactor walls **46, 48** have a higher coefficient of thermal expansion than the catalyst **60**. The outer reactor wall **46** expands most because it is in direct contact with the combustion gases **28**, while the inner reactor wall **48** also expands, but not as much. The catalyst **60** expands least due to the low coefficient of thermal expansion, resulting in a catalyst volume less than the new volume of the reaction chamber **50**. Consequently, once the reactor walls **46, 48** expand, gravity acting upon the catalyst **60** causes the catalyst **60** to move downward in the reaction chamber **50** filling voids caused by the increase in volume. This process is known as catalyst "slumping". Slumping will occur in any conventional catalytic reactor or container having solid particles, such as a catalyst or other solid heat transfer material; having a thermal coefficient of expansion greater than that of the solid particles; exposed to a heat source; and positioned in a vertical arrangement.

During shut-down when the catalytic reactor **14** cools, the reactor walls **46, 48** contract; however, since the catalyst **60** has been redistributed downward, cooling of the catalytic reactor **14** results in the reactor walls **46, 48** exerting mechanical pressure on the catalyst **60**. When the mechanical pressure is applied, the weight of the catalyst bed **62** and the friction forces between the catalyst **60** and the reactor walls **46, 48** prevent the catalyst **60** from rising in the catalytic reactor **14**. A portion of this mechanical pressure is adsorbed by the catalyst **60** and the reactor walls **46, 48** while the remainder crushes some of the catalyst **60** into catalyst particles **(not shown)**.

Catalyst **60** slumping and crushing causes several problems within the catalytic reactor **14**. The resulting catalyst particles **(not shown)** have a higher drag coefficient than the original catalyst **60** so the product gas **58** may lift the catalyst particles **(not shown)** out of the reaction chamber **50**. The first effect of the catalyst **60** loss is a decrease in the fuel conversion rate in the hot section **38** of the catalytic reactor **14**. This requires that the catalytic reactor **14** be operated at ever increasing temperatures to achieve the desired fuel conversion.

Another effect is that the catalytic reactor **14** may have to be prematurely shutdown. Typically, reactors are designed to operate a number of years with multiple start-up/shut-down thermal cycles per year, resulting in a series of thermal cycles, each one of which is associated with the slumping and crushing of some catalyst **60**. When enough catalyst **60** is lost so that the efficiency of the catalytic reactor **14** has decreased sufficiently, the catalytic reactor **14** may have to be shutdown and new catalyst **60** loaded. Further, if enough catalyst **60** is crushed so that voids in the catalyst **60** are reduced, the catalytic reactor **14** may become clogged, thereby unacceptably restricting the flow of the reactor fuel and steam **54** through the catalyst bed **62**. Thus, clogging may make it necessary to remove the catalyst **60** and insert new catalyst **60**.

A reactor designed to reduce catalyst slumping and crushing is described in U.S. Patent No. 4,203,950, incorporated herein by reference in its entirety. The reactor disclosed in U.S. Patent No. 4,203,950, addresses catalyst slumping and crushing by reducing the mechanical pressure of the reactor walls on the catalyst. An optimal mechanical pressure range is determined and the catalytic reactor and the catalyst are design to conform to that range.

Although the catalytic reactor disclosed in U.S. Patent No. 4,203,950 significantly reduces the problem of catalyst slumping and crushing due to thermal cycling, the solution taught by U.S. Patent No. 4,203,950 requires that certain variables with respect to the design of the catalytic reactor and the catalyst, such as dimensions and elasticity ranges, be within certain values. Since the catalytic reactors must be built to that teaching, this solution cannot be applied to existing catalytic reactors. Also, the design set forth in U.S. Patent No. 4,203,950 does not solve the problem of slumping and crushing for catalytic reactors which by their design cannot conform to the optimum mechanical pressure range due to operating conditions which require a large number of thermal cycles or catalytic reactors of a increased height or diameter.

Reference is also made to JP-A-3238036 which discloses a catalytic reactor having partitions in the reaction chamber. The partitioning parts are fixedly mounted in direct contact with the inner and outer walls of the reaction chamber, and all of the partitioning parts are evenly spaced one from the next along the entire height of the reaction chamber.

### Disclosure of the Invention

It is an object of the present invention to provide an improved catalytic reaction apparatus, which reduces catalyst slumping and crushing and can be applied to existing catalytic reactors, having a plurality of fixtures therein in which the height of the fixtures varies thorughout the catalytic reactor.

In accordance with the invention there is provided a vertical catalytic reactor for steam reforming a reactor fuel into a product gas, said catalytic reactor having an outer reactor wall and an inner reactor wall, said inner reactor wall spaced from said outer reactor wall defining a reaction chamber having a width between said outer and inner reactor walls, said reaction chamber having an inlet disposed within the reaction chamber for entry of the reactor fuel and steam, an outlet disposed within the reaction chamber spaced away from the inlet for exit of the product gas, a catalyst disposed within the reaction chamber forming a catalyst bed such that the reactor fuel and steam flow in contact with the catalyst bed, a plurality of fixtures for dividing the catalyst bed into a plurality of catalyst sections, each of the fixtures having a perforated plate having a plurality of holes therethrough, said perforated plate capable of retaining the catalyst while allowing the flow of the reactor fuel and steam through the catalyst, said catalyst sections (124 a, b) and fixtures (100 a,b) having a weight, said fixtures (100 a,b) being disposed within the reaction chamber (50) such that there is at least a first fixture (100 a) and a second fixture (100b), said first fixture (100a) disposed below the second fixture (100b) and said first and second fixtures (100a, b) containing the first and second catalyst sections (124 a,b) respectively, therein, and a support plate (64) disposed within the reaction chamber (50) for supporting the catalyst bed (62) and fixtures (100a,b),
characterized in that each fixture (100a,b), comprises:
i. a plurality of rods (112a,b) having a height (h), said rods having one end (114) supported by a first perforated plate (106a) and an opposite end (116) for contacting the next adjacent second perforated plate (106b) for supporting said next adjacent second perforated plate (106b) and the catalyst supported thereon, wherein the height (h) of the rods(112a) in the first catalyst section (124a) differs from the height of the rods (112b) in the adjacent second catalyst section (124b).

### Brief Description of the Drawings

Fig. **1** is a cross-sectional view of a prior art catalytic reaction apparatus in which a plurality of fixtures **(not shown)** of the present invention can be employed.

Fig. **2** is an isometric view of one embodiment of a fixture.

Fig. **3** is an enlarged view of the area within the line **3** of Fig. **1**, showing the disposition of a plurality of fixtures within a reaction chamber.

These figures are meant to be exemplary and not to limit the generally broad scope of the present invention.

### Best Mode of Carrying Out the Invention

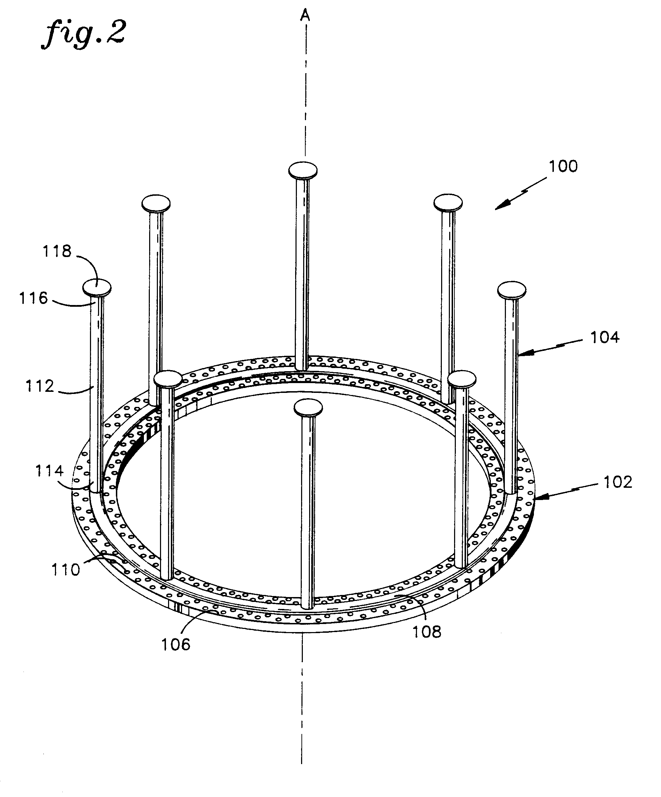

Fig. **2** is an isometric view of one embodiment of a fixture **100**. Fixture as used in this description and in the appended claims means a structure for dividing a catalyst bed **(not shown)** into a plurality of catalyst sections **(not shown)**. The fixture **100** has a base **102** for dividing the catalyst bed **(not shown)** into the catalyst sections **(not shown).** Coupled to the base **102** is a number of vertical support means **104** for supporting the weight of a second fixture and catalyst within the second fixture **(not shown)**. The fixture **100** has an axis of symmetry **A**. In this embodiment, the base **102** is an annular perforated plate **106** coupled to an annular stiffening member **108**. The perforated plate **106** has a multiplicity of holes disposed through its surface, represented by the holes **110**. The holes **110** should be capable of retaining the catalyst **(not shown)** while allowing the flow of the reactor fuel and steam **(not shown)** in contact with the catalyst bed **(not shown)**.

The vertical support means **104** in this embodiment are a plurality of rods, represented by the rod **112**, coupled circumferentially about the stiffening member **108**. Each rod **112** has a first end **114** opposed to a second end **116**. The first end **114** is attached to the stiffening member **108** and the rod **112** extends upwardly from the stiffening member **108**, parallel to the axis of symmetry **A** to terminate with the second end **116**. Each of the plurality of rods **112** has a referencing means **118** attached at the second end **116**. The referencing means **118** is used as a visual reference so that each fixture **100** is not overloaded with catalyst **(not shown)**. The referencing means **118** in this embodiment is a disk.

Other embodiments may employ rods **112** with 90° angles at the second end **116** instead of a referencing means **118**, or rods with a ring at the second end **116**, so long as the rods **112** maintain the distance between adjacent perforated plates **(not shown)** without imparting the weight of the superjacent catalyst section and fixture **(not shown)** to the subjacent catalyst section **(not shown)**.

The fixture **100** in this embodiment is made of stainless steel and designed to withstand the thermal cycles and the weight of the catalyst section **(not shown)**; however, any material that can satisfy these requirements can be utilized. Several characteristics of the fixture **100**, such as the number of rods **112** and the dimensions of the rods **112**, the stiffening member **108**, and the perforated plate **106** are based upon the necessary structural integrity of the fixture **100** and its ability to support the catalyst section **(not shown)**. Since the stiffening member **108** is rigidly attached to the perforated plate **106**, the stiffening member **108** provides additional strength and rigidity to the perforated plate **106**, thus, decreasing the necessary plate thickness **t (not shown)**. Other embodiments of the fixture **100** may eliminate the stiffening member **108** in favor of a more substantial perforated plate **106**.

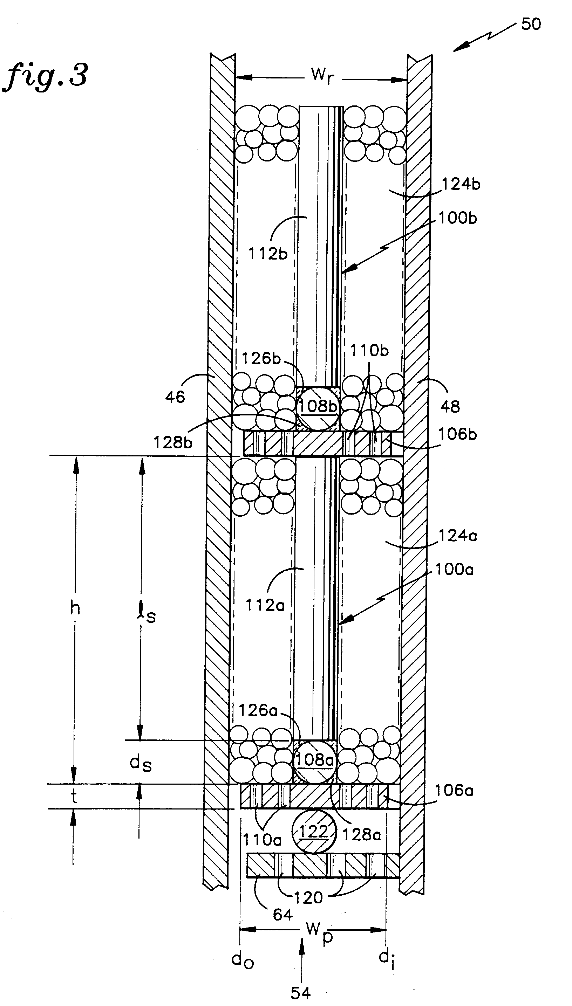

Fig. **3** is an enlarged view of the area within the line **3** of Fig. **1**, showing the disposition of a plurality of fixtures **100** within a reaction chamber **50**. The perforated support plate **64** is disposed within the reaction chamber **50** and has a multiplicity of holes represented by the holes **120**. The support plate **64** is rigidly attached to the inner reactor wall **48**. The distance between the inner reactor wall **48** and the outer reactor wall **46** is the reaction chamber width **w**_{**r**}. Resting on the support plate **64** is a standoff **122**. Superjacent to the standoff **122** is the first fixture **100a**, which contains the first catalyst section **124a**. Above the first fixture **100a** is the second fixture **100b** which `contains the second catalyst section **124b**. It should be understood that a multiple number of fixtures may be used as necessary although the catalytic reaction chamber **50** shown in Fig. **3** only has two fixtures **100a, b**.

The standoff **122** allows the flow of the reactor fuel and steam **54** to be uninterrupted by a possible misalignment of the first fixture **100a** with the support plate **64**. The standoff **122** can be any means for separating the support plate **64** from the perforated plate **106a** of the first fixture **100a**, such as a permanent fixture or a support plate coupled with a number of vertical support means **104** similar to that for the fixtures. However, in this embodiment, the standoff **122** is a steel ring.

In this embodiment, each fixture **100a, b** consists of a perforated plate **106a, b**, a stiffening member **108a, b** and a plurality of rods, represented by the rod **112a, b**. Each perforated plate **106a, b** has a multiplicity of holes represented by the holes **110a, b**, respectively. Each rod **112a, b** is attached to the stiffening member **108a, b** with a rod weld **126a, b**. The perforated plates **106a, b** are attached to the other side of the stiffening member **108a, b** with a base weld **128a, b**. Although in the embodiment shown the rods **112a, b** extend from the stiffening member **108a, b** upward, it is understood by those skilled in the art that the fixtures **100a, b** can be designed such that the rods **112a, b** extend from the stiffening member **108a, b** downward, in which case the standoff **122** may not be necessary. Each rod has a length **l**_{**s**}.

The perforated plates **106a, b** have a thickness **t**, an inner diameter **d**_{**i**}, an outer diameter **d**_{**o**}, and a width **w**_{**p**} which is the distance from the inner diameter **d**_{**i**} to the outer diameter **d**_{**o**}. The perforated plate width **w**_{**p**} must be less than the reaction chamber width **w**_{**r**}, to allow easy installation of the fixtures **100a, b** within the reaction chamber **50**. The stiffening members **108a, b** have a diameter **d**_{**s**}.

Each fixture **100a, b** has a height **h** defined by the length **l**_{**s**} of each rod **112a, b** added to the diameter **d**_{**s**} of each stiffening member **108a, b**. The preferred fixture height **h** varies throughout the catalytic reactor **14** based upon the thermal cycle and the weight that the fixture must support, which corresponds to the location of the fixture within the catalytic reactor **14**. The preferred fixture height **h** will allow the catalyst within a given section to resist an acceptable amount of slumping and crushing for the operating life of the catalytic reactor.

In practice, as shown in Fig. **1**, the fixtures **(not shown)** are used in a vertical catalytic reactor. A vertical catalytic reactor **14** is intended to describe a catalytic reactor where the catalyst **60** material located within the catalytic reactor **14** is subject to the slumping problem. Before the reactor cap **44** is welded to the reactor tube **42**, the reaction chamber **50** is loaded.

Referring to Figs. **1**, **2** and **3** as necessary, first the standoff **122** is placed on the support plate **64**. Then the first fixture **100a** is inserted into the reaction chamber **50,** such that the axis of symmetry **A** of the catalytic reactor **14** and the fixture **100a** are aligned. The first fixture **100a** is then filled with the first catalyst section **124a** utilizing the referencing means **118** at the second end **116** of the rod **112**. Next, the second fixture **100b** is loaded into the reaction chamber **50** so that the rods **112b** on the second fixture **100b** are aligned with the rods **112a** of the first fixture **100a**. This limits the bending load and lateral transverse stress experienced by the fixtures **100a, b**, and decreasing the structural requirements of the material of which the fixtures **100a, b** are made. Reaction chamber **50** loading is completed by alternately loading additional catalyst sections **(not shown)** and fixtures **(not shown)** in the aforementioned manner until the reaction chamber **50** is filled with catalyst **60** to the necessary height, which is well known in the art.

Referring to Fig. **1**, once loading is complete, the reactor cap **44** is welded to the reactor tube **42**. During the temperature increase at start-up, with the fixtures **100a, b** within the reaction chamber **50,** the first catalyst section **124a** bears only the weight of the first catalyst section **124a**, while the weight of second fixture **100b** and second catalyst section **124b** are supported by the first fixture **100a** through the rods **112a**. This decrease in weight results in only minimal local slumping within each fixture **100a, b** and minimal catalyst movement from the second fixture **100b** to the first fixture **100a**.

During cool down, as the reactor walls **46, 48** contract, they exert mechanical pressure on the slumped catalyst sections **124a, b**. However, due to the support of the superjacent catalysts' weight, most of the slumped catalyst being unrestrained is free to move upward within its section under the mechanical pressure instead of crushing. Thus, only minimal crushing of the catalyst occurs.

## Claims

1. A vertical catalytic reactor (14) for steam reforming a reactor fuel into a product gas, said catalytic reactor having an outer reactor wall (46) and an inner reactor wall (48), said inner reactor wall (48) spaced from said outer reactor wall (46) defining a reaction chamber (50) having a width (Wr)between said outer and inner reactor walls, said reaction chamber (50) having an inlet (52) disposed within the reaction chamber (50) for entry of the reactor fuel and steam, an outlet (30) disposed within the reaction chamber spaced from the inlet (52) for exit of the product gas, a catalyst (60) disposed within the reaction chamber (50) forming a catalyst bed (62) such that the reactor fuel and steam flow in contact with the catalyst bed, a plurality of fixtures (100 a,b) for dividing the catalyst bed into a plurality of catalyst sections (124 a, b), each of the fixtures having a perforated plate (106a,b) having a plurality of holes (110a,b) therethrough, said perforated plates (106a,b) capable of retaining the catalyst (60) while allowing the flow of the reactor fuel and steam through the catalyst, said catalyst sections (124 a, b) and fixtures (100 a,b) having a weight, said fixtures (100 a,b) being disposed within the reaction chamber (50) such that there is at least a first fixture (100 a) and a second fixture (100b), said first fixture (100a) disposed below the second fixture (100b) and said first and second fixtures (100a, b) containing the first and second catalyst sections (124 a,b), respectively, therein, and a support plate (64) disposed within the reaction chamber (50) for supporting the catalyst bed (62) and fixtures (100a,b),
characterized in that each fixture (100a,b), comprises:
i. a plurality of rods (112a,b) having a height (h), said rods having one end (114) supported by a first perforated plate (106a) and an opposite end (116) for contacting the next adjacent second perforated plate (106b) for supporting said next adjacent second perforated plate (106b) and the catalyst supported thereon, wherein the height (h) of the rods(112a) in the first catalyst section (124a) differs from the height of the rods (112b) in the adjacent second catalyst section (124b).

2. A vertical catalytic reactor (14) according to claim 1 characterized in that the perforated plates (106a,b) are spaced from and supported independently of the inner (48) and outer (46) reactor walls.

3. A vertical catalytic reactor (14) according to any one of claim 1 to 2 characterized in that the perforated plates (106a,b) comprise a stiffening member (108) connected thereto.

4. A vertical catalytic reactor (14) according to any one of claims 1 to 3, characterized in that the rods (112a) supported by one plate (106a) are vertically aligned with the rods (112b) supported by plate (106b).

5. A fixture (100) for dividing a solid particle bed (50) into a plurality of solid particle sections (124), said solid particle sections (124) and fixture having a weight,
characterized in that the fixture comprizes:
i. a perforated plate (106) for dividing the solid particle bed (50) into said solid particle sections (124), said perforated plate (100) having a multiplicity of holes (110) capable of retaining the solid particles while allowing the flow of a gas through said solid particle section (124), and
ii. a plurality of rods (112) having a height (h) for supporting the weight of the solid particles above the fixture (100), said rods (112) disposed about the perforated plate (106), wherein the height (h) of said rods in adjacent fixtures varies depending on the heat and weight to which said rods are subjected.

## Patentansprüche

1. Vertikaler katalytischer Reaktor (14) zum Dampfreformieren eines Kernbrennstoffes in ein Produktgas, wobei der katalytische Reaktor eine äußere Reaktorwand (46) und eine innere Reaktorwand (48) aufweist und die innere Reaktorwand (48) von der äußeren Reaktorwand (46) so beabstandet ist, daß sie eine Reaktionskammer (50) mit einer Breite (Wr) zwischen der äußeren und der inneren Reaktorwand bildet, wobei die Reaktionskammer (50) eine Eintrittsöffnung (52) innerhalb der Reaktionskammer (50) für den Eintritt des Kernbrennstoffes und des Dampfes und eine von der Eintrittsöffnung (52) beabstandete Austrittsöffnung (30) innerhalb der Reaktionskammer (50) für den Austritt des Produktgases aufweist, einen innerhalb der Reaktionskammer (50) angeordneten Katalysator (60), der ein Katalysatorbett (62) derart bildet, daß der Kernbrennstoff und der Dampf beim Einströmen mit dem Katalysatorbett in Kontakt gelangen, eine Vielzahl von Befestigungen(100 a, b) zum Teilen des Katalysatorbettes in eine Vielzahl von Katalysatorabschnitten (124 a, b), wobei jede der Befestigungen eine perforierte Platte (106 a, b) mit einer Vielzahl von durchgehenden Löchern (110 a, b) aufweist und die perforierten Platten (106 a, b) den Katalysator (60) zurückhalten während der Kernbrennstoff und der Dampf durch den Katalysator hindurchströmen, wobei die Katalysatorabschnitte (124 a, b) und die Befestigungen (100 a, b) mit einem Gewicht beaufschlagt sind und die Befestigungen (100 a, b) innerhalb der Reaktionskammer (50) derart angeordnet sind, daß mindestens eine erste Befestigung (100 a) und eine zweite Befestigung (100 b) vorliegen, wobei die erste Befestigung (100 a) unterhalb der zweiten Befestigung (100 b) angeordnet ist und die erste und die zweite Befestigung (100 a, b) den ersten bzw. den zweiten Katalysatorabschnitt (124 a, b) darin enthalten, und eine innerhalb der Reaktionskammer (50) angeordnete Trägerplatte (64) zum Tragen des Katalysatorbettes (62) und der Befestigungen (100 a, b),
dadurch gekennzeichnet, daß jede Befestigung (100 a, b) folgendes umfaßt:
i. eine Viezahl an Stäben (112 a, b) mit einer Höhe (h), wobei die Stäbe ein von der ersten perforierten Platte (106a) getragenes eines Ende (114) aufweisen, und ein entgegengesetztes Ende (116) zum Kontaktieren der nächsten benachbarten zweiten perforierten Platte (106b) zum Tragen der nächsten benachbarten zweiten perforierten Platte (106b) und des darauf getragenen Katalysators, wobei sich die Höhe (h) der Stäbe (112a) im ersten Katalysatorabschnitt (124a) von der Höhe der Stäbe (112b) im benachbarten zweiten Katalysatorabschnitt (124b) unterscheidet.

2. Vertikaler katalytischer Reaktor (14) nach Anspruch 1,
dadurch gekennzeichnet, daß die perforierten Platten (106a, b) unabhängig von der inneren (48) und der äußeren (46) Reaktorwand getragen werden und von diesen beabstandet sind.

3. Vertikaler katalytischer Reaktor (14) nach einem der Ansprüche 1 bis 2,
dadurch gekennzeichnet, daß die perforierten Platten (106a, b) ein mit ihnen verbundenes Verstärkungselement (108) aufweisen.

4. Vertikaler katalytischer Reaktor (14) nach einem der Ansprüche 1 bis 3,
dadurch gekennzeichnet, daß die von der einen Platte (106a) getragenen Stäbe (112a) mit den von der Platte (106b) getragenen Stäben (112b) vertikal ausgerichtet sind.

5. Befestigung (100) zum Teilen eines Festteilchenbettes (50) in eine Vielzahl von Festteilchenabschnitten (124), wobei die Festteilchenabschnitte (124) und die Befestigung mit einem Gewicht beaufschlagt sind,
dadurch gekennzeichnet, daß die Befestigung folgendes umfaßt:
i eine perforierte Platte (106) zum Teilen des Festteilchenbettes (50) in Festteilchenabschnitte (124), wobei die perforierte Platte (100) eine Vielzahl von Löchern (110) aufweist, die die Festteilchen zurückhalten während ein Gas durch den Festteilchenabschnitt (124) strömen kann, und
ii. eine Vielzahl von Stäben (112) mit einer Höhe (h) zum Tragen des Gewichtes der Festteilchen oberhalb der Befestigung (100), wobei die Stäbe (112) um die perforierte Platte (106) herum angeordnet sind, und wobei die Höhe (h) der Stäbe in benachbarten Befestigungen in Abhängigkeit von Wärme und Gewicht, denen die Stäbe ausgesetzt sind, variiert.

## Revendications

1. Réacteur catalytique (14) vertical pour reformer à la vapeur un combustible réactif en un gaz produit, ledit réacteur catalytique comportant une paroi extérieure (46) de réacteur, et une paroi intérieure (48) de réacteur, ladite paroi intérieure (48) de réacteur à une certaine distance de ladite paroi extérieure (46) de réacteur définissant une chambre de réaction (50) ayant une largeur (Wr) entre lesdites parois extérieure et intérieure, ladite chambre de réaction (50) comportant une entrée (52) disposée à l'intérieur de la chambre de réaction (50) destinée à laisser entrer le combustible réactif et la vapeur, une sortie (30) disposée à l'intérieur de la chambre de réaction à une certaine distance de l'entrée (52) et destinée à laisser sortir le gaz produit, un catalyseur (60) disposé à l'intérieur de la chambre de réaction (50) en formant un lit (62) de catalyseur, de sorte que le combustible réactif et la vapeur s'écoulent en contact avec le lit de catalyseur, une pluralité d'armatures (100a, b) destinées diviser le lit de catalyseur en une pluralité de sections (124a, b) de catalyseur, chacune des armatures comportant une plaque perforée (106a, b) capable de retenir le catalyseur (60) tout en permettant l'écoulement du combustible réactif et de la vapeur à travers le catalyseur, lesdites sections (124a, b) de catalyseur et armature (100a, b) ayant un poids, lesdites armatures (100a, b) étant disposées à l'intérieur de la chambre de réaction (50) de sorte qu'il y ait au moins une première armature (100a) et une seconde armature (100b), ladite première armature (100a) étant disposée au-dessous de la seconde armature (100b) et lesdites première et seconde armatures (100a, b) contenant respectivement en leur sein les première et seconde sections (124a, b) de catalyseur, et une plaque de support (64) étant disposée à l'intérieur de la chambre de réaction (50) de façon à supporter le lit (62) de catalyseur et les armatures (100a, b),
caractérisé en ce que chaque armature (100a, b) comprend :
i. une pluralité de tiges (112a, b) ayant une hauteur (h), lesdites tiges comportant une extrémité (114) supportée par une première plaque perforée (106a) et une extrémité opposée (116) destinée à être en contact avec la seconde plaque perforée (106b) adjacente suivante de façon à supporter ladite seconde plaque perforée (106b) adjacente suivante et le catalyseur supporté sur elle, la hauteur (h) des tiges (112a) situées dans la première section de catalyseur (124a) diffèrant de la hauteur des tiges (112b) situées dans la seconde section (124b) de catalyseur adjacente.

2. Réacteur catalytique (14) vertical selon la revendication 1, caractérisé en ce que les plaques perforées (106a, b) sont à une certaine distance des parois intérieure (48) et extérieure (46) de réacteur et son supportées indépendamment de celles-ci.

3. Réacteur catalytique (14) vertical selon l'une quelconque des revendications 1 à 2, caractérisé en ce que les plaques perforées (106a, b) comprennent un élément de raidissement (108) relié à elles.

4. Réacteur catalytique (14) vertical selon l'une quelconque des revendications 1 à 3, caractérisé en ce que les tiges (112a) supportées par une plaque (106a) sont alignées verticalement avec les tiges (112b) supportées par la plaque (106b).

5. Armature (100) destinée à diviser un lit (50) de particules solides en une pluralité de sections (124) de particules solides, lesdites sections (124) de particules solides et armature ayant un poids,
caractérisée en ce que l'armature comprend :
i. une plaque perforée (106) destinée à diviser le lit (50) de particules solides en lesdites sections (124) de particules solides, ladite plaque perforée (100) comportant une multiplicité de trous (110) capables de retenir lesdites particules solides tout en permettant l'écoulement d'un gaz à travers ladite section (124) de particules solides, et
ii. une pluralité de tiges (112) ayant une hauteur (h) destinées à supporter le poids des particules solides au-dessus de l'armature (100), lesdites tiges (112) étant disposées autour de la plaque perforée (106), la hauteur (h) desdites tiges situées dans les armatures adjacentes variant en fonction de la chaleur et du poids auxquels lesdites tiges sont soumises.
